# FASCICULE DE BREVET EUROPEEN

(11) **EP 0 478 439 B1**
(45) Date de publication et mention de la délivrance du brevet: **10.08.1994**
(21) Numéro de dépôt: 91402535.8
(22) Date de dépôt: 24.09.1991
(51) Int. Cl.: B23G 1/38, B23Q 1/24

(54) **Machine adaptée à la fabrication de vis rectifiées à partir de barres à tailler**
Maschine zur Herstellung von geschliffenen Schrauben ausgehend von Stäben
Machine for manufacturing ground screws starting from rods

(30) Priorité: 25.09.1990 FR 9011809
(43) Date de publication de la demande: 01.04.1992
(73) Titulaire: ELBI (société à responsbilité limitée), F-77104 Meaux Z.I. (FR)
(72) Inventeur: Migeon, Jacques, F-95470 Saint Witz (FR)
(74) Mandataire: Sauvage, Renée

(56) Documents cités:
- DE-A- 1 763 379
- DE-C- 223 722
- US-A- 2 125 584
- US-A- 3 591 987

## Description

La présente invention concerne une machine adaptée à la fabrication de vis rectifiées à partir de barres à tailler, et en particulier à la fabrication de vis à billes selon le préambule de la revendication 1.

Plus précisément, l'invention se rapporte à une machine du type comportant, de première part, des moyens adaptés à recevoir et à entraîner en rotation une vis mère et ladite barre à tailler selon deux axes parallèles, de deuxième part, un ensemble mobile porteur de moyens abrasifs adaptés à venir en contact avec ladite barre et à la tailler, ledit ensemble mobile comportant des moyens coopérant avec le filet de ladite vis mère pour être entraîné et se déplacer le long de celle-ci et, de troisième part, des moyens de guidage pour ladite barre à tailler.

Les machines connues de ce type sont utilisées, sauf exception, non pas pour fabriquer des vis rectifiées à partir de barres à tailler, mais pour rectifier des vis sur lesquelles le filet a déjà été ébauché. La vis à rectifier, qui peut être de grande longueur, est guidée et soutenue de place en place par une série de "lunettes" dépendant du bâti de la machine et ayant pour objet d'éviter toute déformation de la barre, tant par suite d'un fléchissement sous l'effet de son propre poids que par suite de la poussée qu'exercent sur la barre les moyens abrasifs lorsqu'ils l'attaquent. Pour permettre aux moyens abrasifs d'attaquer la vis à rectifier au niveau où elle est soutenue par les lunettes, ces lunettes doivent soit être montées de façon escamotables ce qui nécessite de prévoir un mécanisme approprié, soit autoriser l'accès à la barre d'une autre manière. Mais leur inconvénient majeur est d'être d'un règlage extrêmement délicat, règlage qui doit être entièrement repris à chaque fois que l'on change de diamètre de vis à rectifier. Il s'ensuit le nécessaire recours à du personnel hautement qualifié et une perte de temps et de productivité considérable. En outre, ces rectifieuses étant des machines très coûteuses, on évite de les mobiliser pour des opérations d'ébauche qui sont conduites à l'aide d'autres équipements. Indépendamment de cette question économique, ces rectifieuses ne peuvent permettre que de fabriquer des vis rectifiées, directement à partir d'une barre à tailler, que lorsqu'il s'agit d'obtenir des vis de petits pas car pour les pas importants, les lunettes sont impropres à concerver, à l'encontre de l'effort exercé par des moyens abrasifs, le rectitude voulue pour la barre.

La présente invention a pour but de remédier à ces inconvénients en proposant une structure qui supprime le besoin en lunettes et qui permette de tailler directement une vis rectifiées à partir d'une barre à tailler.

Ce but est atteint en ce sens que, dans la machine selon l'invention, les moyens de guidage de la barre à tailler sont constitués d'un manchon cylindrique dépendant de l'ensemble mobile et coaxial à l'axe de la barre à tailler, ledit manchon étant adapté à être traversé sans jeu par ladite barre et présentant, dans un plan faisant un angle avec ledit axe, une lumière au travers de laquelle les moyens abrasifs accèdent à ladite barre.

Dans un mode de réalisation préféré, le plan de la lumière est transversal audit axe.

Grâce à cette disposition, la barre à tailler est constamment soutenue de part et d'autre de la zone de travail des moyens abrasifs de sorte que la poussée qu'ils exercent ne déforme pas cette zone de travail. Par ailleurs, tout éventuel fléchissement de la barre à tailler est constamment corrigé dans la zone de travail au passage de l'ensemble mobile et de son manchon. On contrôle ainsi parfaitement la profondeur du sillon creusé par les moyens abrasifs quelle que soit la rectitude de la barre et assure une concentricité parfaite du filet par rapport au diamètre extérieur, ceci en tous points de la barre. L'avantage est surtout significatif pour les barres flexibles.

Dans une forme d'exécution pratique de l'invention, le manchon est constitué, d'une part, d'un palier fixé audit ensemble mobile et, d'autre part, d'un fourreau en matière plastique emboîté de manière amovible dans ledit palier, ladite lumière étant ménagée la fois dans ledit palier et ledit fourreau. La matière plastique choisie pour le fourreau doit être compatible avec la présence d'abrasif et de lubrifiant. L'usure du fourreau est insignifiante et son remplacement est d'un coût négligeable.

Il apparaît ainsi qu'au lieu d'une série de lunettes compliquant la structure des machines connues et demandant les réglages minutieux évoqués glus haut, on n'utilise selon l'invention qu'un simple fourreau d'un diamètre interne approprié à celui de la barre à tailler. Si l'on change de diamètre de barre, il suffit de remplacer le fourreau et éventuellement le palier précédemment utilisés par un fourreau et éventuellement un palier de diamètre interne approprié. Trois diamètres de paliers suffisent pour réaliser des vis de 8 à 10̸0̸ mm de diamètre, le diamètre externe du fourreau dépendant du palier utilisé et son diamètre interne étant déterminé par celui du fourreau.

Dans une forme préférée de l'invention, les moyens coopérant avec le filet de ladite vis mère sont constitués par un ensemble d'écrous monté dans un boîtier oscillant, lequel boîtier est soumis à l'action de moyens correcteurs de pas.

Le système d'écrous est, de préférence, constitué de deux écrous billes préchargés, clavetés ensemble. Lorsque la vis mère tourne, elle entraîne le système d'écrous dans une direction fonction de son sens de rotation, et le système d'écrous entraîne l'ensemble mobile qui en dépend. Le déglacement de l'ensemble mobile reflète donc exactement le pas de la vis mère, y compris les imperfections éventuelles de ce pas.

Des moyens correcteurs de pas peuvent y remédier en agissant sur le système d'écrous, par l'intermédiaire du boîtier oscillant dudit système.

A cette fin, les moyens correcteurs de pas sont constitués, d'une part, d'une surface de came à géométrie réglable dépendant d'un rail parallèle à la vis mère et, d'autre part, d'un galet de poursuite dépendant dudit boîtier oscillant et adapté à suivre ladite surface de came. Le rail a la forme d'un U et la surface de came est constituée d'une bande métallique déformable vissée le long de la face interne de l'une des ailes du U par une série de vis au moyen desquelles des parties de ladites bande peuvent être plus ou moins écartées de ladites aile pour compenser les défauts de la vis mère.

La réalisation de la surface de came effectuée une fois pour toutes, en fonction de la vis mère, lors de sa mise en place dans la machine.

Avantageusement, le rail peut être monté pivotant à l'une de ses extrémités auquel cas son autre extrémité comporte des moyens de réglage adaptés à décaler d'un degré voulu l'axe longitudinal dudit rail par rapport à celui de la vis mère, aux fins d'opérer une correction de pas globale.

Une telle correction globale peut être demandée pour la fabrication de vis rectifiées particulières.

Dans les machines connues, les moyens abrasifs attaquent généralement la barre à tailler selon un plan oblique par rapport à l'axe longitudinal de ladite barre. A cette fin, les moyens abrasifs sont montés dans des têtes orientables.

Comme indiqué plus haut, la lumière ménagée dans le manchon de guidage selon l'invention appartient de préférence à un plan qui est transversal audit axe et il s'ensuit que les moyens abrasifs, c'est-à-dire la meule, sont orientés dans un tel plan transversal invariable.

On supprime ainsi la structure complexe et coûteuse des têtes orientables, mais crée un léger problème facilement soluble : le plan de la meule restant perpendiculaire à l'axe de la barre à tailler, le profil du filet subit théoriquement un évasement en raison de l'inclinaison de l'hélice de la vis en cours de fabrication. Cette erreur de profil est insignifiante pour les pas peu inclinés, mais elle devient critique pour les grands pas. On y remédie de façon simple et économique en aménageant le profil de la meule en conséquence.

A cet effet, on utilise, comme moyens abrasifs, une meule dont le profil de travail est sensiblement elliptique, profil que l'on peut obtenir en munissant l'ensemble mobile de moyens de diamantage adaptés à détalonner, sensiblement en ellipse, le profil de travail de la meule à sa mise en service ou en cours d'utilisation, entre deux passes.

L'invention sera mieux comprise à la lecture de la description ci-après faite en référence aux dessins annexés dans lesquels :
- la figure 1 est une vue de profil schématique d'ensemble de la machine selon l'invention,
- la figure 2 est une vue en perspective schématique éclatée montrant le dispositif de guidage de la barre à tailler selon l'invention, la meule de rectification et les moyens de correction de profil de travail de la meule,
- la figure 3 est une vue en perspective du palier appartenant au manchon de guidage,
- la figure 4 est une vue en perspective du fourreau, appartenant au manchon du guidage,
- la figure 5 montre le profil de la meule après détalonnage,
- la figure 6 est une vue en perspective schématique montrant la relation entre la vis mère, le système d'écrous et son boîtier oscillant, et
- la figure 7 est une vue en perspective schématique des moyens de correction de pas.

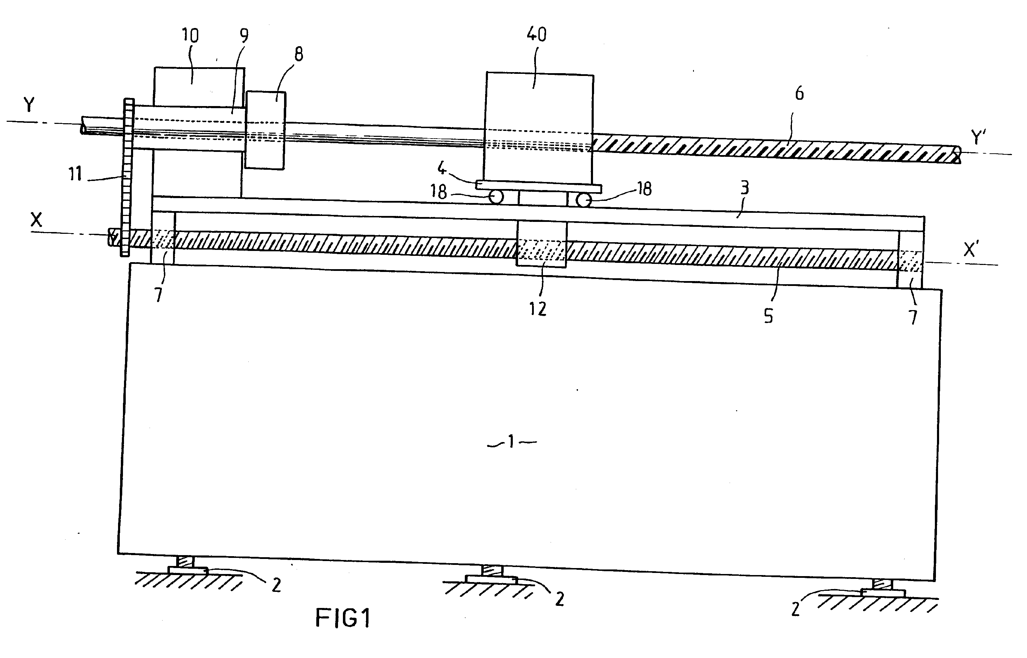

Si l'on se réfère à la figure 1, on voit la machine selon l'invention comprenant un bâti 1 reposant au sol sur des vérins à vis 2 et portant une paire de rails parallèles de guidage 3 dont un seul est visible et sur lesquels roule un chariot 4 porteur d'un ensemble mobile 40̸.

Par bâti 1, on entend le socle et le banc de la machine.

Le socle doit être parfaitement rigide. Il peut être constitué d'un ensemble mécanosoudé ou être en fonte moulée, en pierre ou en béton. Le socle contient le bac de lubrifiant et peut être lesté au besoin.

Le socle supporte le banc de la machine, lequel doit pouvoir garder une bonne rectitude quelles que soient les variations de températures : sa rigidité doit permettre la tension de la vis mère sans déformation. Le banc peut être formé d'un ensemble de poutrelles mécanosoudées, rigidifiées et stabilisées, ou être en fonte moulée, en granit taillé ou reconstitué.

Les vérins à vis 2 permettent d'assurer le réglage de l'assise de la machine.

Les rails de guidage 3 sont en acier rectifié traité et sont fixés rigidement sur le banc. Leur rectitude et leur parallèlisme doivent être aussi parfaits que possible. Si le banc est réalisé en fonte moulée, les rails 3 seront partie intégrante du banc et seront donc rectifiés en même temps que ce dernier.

Le chariot 4 repose sur les rails 3 par l'intermédiaire de galet schématisés en 18. Le montage doit permettre d'assurer l'assise du chariot 4 sans risque de basculement, annuler tout jeu de fonctionement, éviter toute oscillation dans le plan horizontal et permettre un déplacement du chariot qui soit parfaitement rectiligne, sans à-coups ni vibration. A cette fin, on peut utiliser, pour le guidage horizontal, quatre galets, deux galets montés sur le chariot par l'intermédiaire d'axes fixes et coopérant avec l'un des rails 3, dit "rail frontal", et deux autres galets dépendant d'un bras monté oscillant sur le chariot et coopérant avec l'autre rail 3. Pour le guidage latéral, on utilise quatre galets horizontaux, deux montés sur le chariot par l'intermédiaire d'axes fixes et coopérant avec l'une des faces latérales du rail frontal et deux galets réglables coopérant avec la face opposée de ce même rail.

Si l'on revient à la figure 1, la référence 5 désigne la vis mère et la référence 6 la barre à tailler. La vis mère 5 et la barre à tailler sont disposées selon deux axes strictement parallèles, respectivement, X-X′ et Y-Y′.

La vis mère 5 est une vis à billes rectifiée de 40̸ mm de diamètre, avec un pas de 6 mm, tendue entre deux paliers 7 fixés au banc.

La barre à tailler 6 est une barre traitée ayant subi au préalable une rectification cylindrique sans centre. A l'une de ses extrémités, elle est supportée dans un palier non visible sur la figure et, à son autre extrémité, elle est bloquée dans un mandrin de serrage 8 dépendant d'une broche creuse 9 qui est reçue dans une poupée fixe 10̸. La broche 9 est montée sans jeu sur roulements à rouleaux coniques et est entraînée par un moto-réducteur à variateur de vitesse (moteur à courant continu et, par exemple, variateur électronique). L'intérêt du variateur est d'ajuster la vitesse de rotation de la barre à tailler 6 aux conditions de rectification (profondeur de passe, diamètre de barre, profil, etc...).

La broche 9 entraîne la vis mère 5 par une transmission 11 sans jeu, qui peut être une chaîne tendue. La transmission 11 sans jeu permet l'inversion du mouvement en fin de course sans décalage du chariot 4 par rapport au filet déjà taillé.

Le rapport de la transmission 11 et le pas de la vis mère 5 définissent le pas de la vis rectifiée à partir de la barre à tailler 6. Un nombre très réduit de pignons permet de réaliser tous les pas multiples et sous-multiples de 2 et 3 depuis 1,5 jusqu'à 24 mm.

Le pignon de broche est monté sur un plateau d'indexation à six trous. Il est surtout utilisé pour réaliser des vis à deux ou trois filets. Un plateau à douze trous permettrait l'obtention de vis à quatre filets.

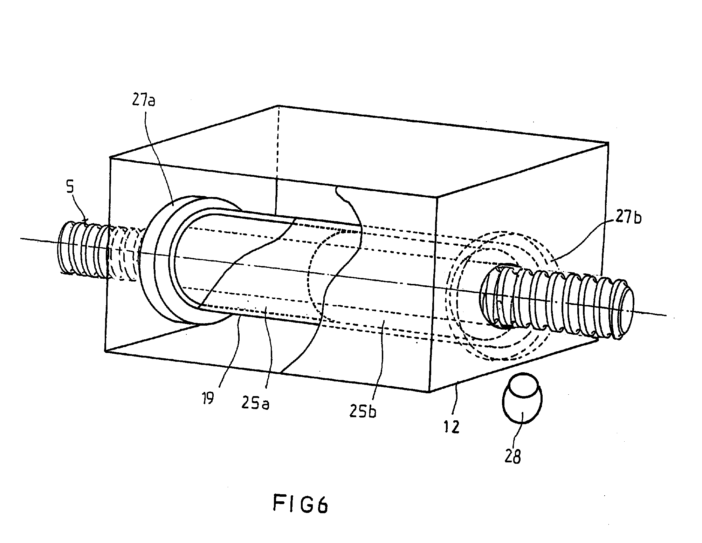

A la figure 1, la référence 12 désigne un boîtier fixe dans lequel se trouve un système d'écrous coopérant avec la vis mère 5. Plus précisément (figure 6), le système d'écrous est constitué d'un écrou double 25a,25b préchargé qui doit pouvoir se déplacer tout au long de la vis mère 5 sans croquage, ni point libre.

On comprend que l'écrou double 25a,25b se déplace le long de la vis mère 5 lorqu'elle tourne, la direction du déplacement dépendant du sens de rotation de la vis. Le déplacement de l'écrou double 25a,25b entraîne celui du boîtier fixe 12 et, comme ce dernier est solidaire du chariot 4, le déplacement dudit chariot. La rotation de la vis mère 5 entraîne donc le déplacement du chariot 4 le long de la barre à tailler 6.

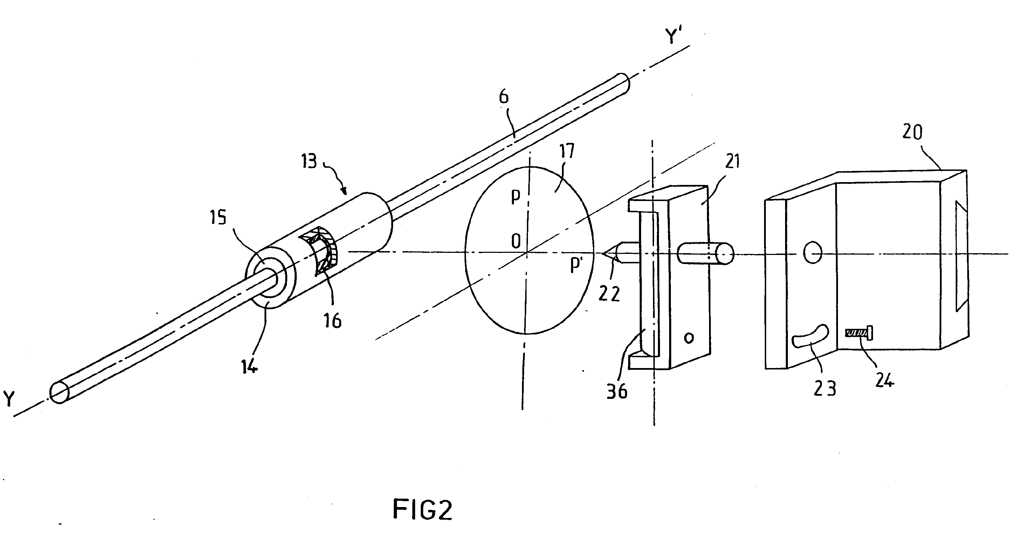

L'ensemble mobile 40̸ porté par le chariot 4 renferme une broche entraînée par un moteur 150̸0̸t/mn - 30̸0̸0̸t/mn de 2 KW entraînant une meule 17 représentée à la figure 2. A titre d'exemple, on peut utiliser :
- soit une meule corindon usuelle de diamètre 250̸ mm et d'épaisseur 10̸ mm pour 180̸0̸ t/mn,
- soit une meule diamant ou au nitrure de bore pour 40̸0̸0̸ t/mn.

L'ensemble moteur-broche est monté sur un chariot transversal commandé par une vis à billes à écrous préchargés. Cette vis peut être équipée d'un vernier manuel ou entraînée par un moteur permettant de contrôler la profondeur de passe et de corriger la conicité de finition.

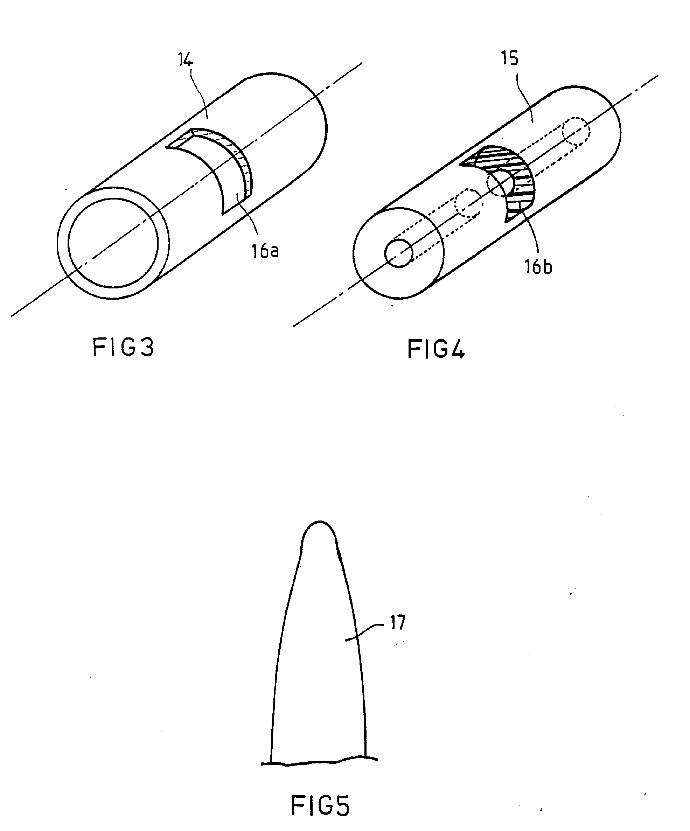

Selon l'invention, la barre à tailler 6 traverse sans jeu un manchon cylindrique 13 qui est constitué d'un palier métallique 14 dépendant de l'ensemble mobile 40̸ et d'un fourreau 15 en matière plastique emboîté dans ledit palier. Le fourreau 14 et le palier 15 (figures 3 et 4) présentent chacun une lumière, respectivement 16a et 16b, adaptées être placées en coïncidence et constituant ensemble la lumière 16 du manchon 13. La lumière 16 est pratiquée dans un plan POP′ (celui de la feuille de dessin) qui est transveral à l'axe longitudinal Y,Y′ de la barre à tailler 6. Dans ce même plan POP′, est montée la meule 17 qui est adaptée à attaquer la barre à tailler 6 au travers de la lumière 16. La zone de travail de la meule se fait donc constamment entre deux portées du manchon 13.

Pour la raison indiquée glus haut, l'ensemble mobile 40 supporte un système de diamantage, composé d'un petit chariot 20 à commande manuelle (commande de profondeur en fonction du diamètre de la meule) et d'un étrier 21 support de porte-diamant 36. L'étrier 21 est monté pivotant par rapport au chariot 20̸, autour d'un axe horizontal se confondant avec l'axe OP′ de la meule 17. L'étrier 21 est immobilisable dans la position choisie grâce à un système de fixation utilisant une fenêtre arquée 23 et une vis de blocage 24. Le porte-diamant 36, qui est équipé d'un diamant 22, est constitué d'un pivot d'axe moyen dans le plan POP′ de la meule 17.

Dans la position médiane de l'étrier 21 et donc du porte-diamant 36, le plan de diamantage dans lequel se déplace la pointe de diamant 22 est perpendiculaire au plan POP′ de la meule. La pointe du diamant 22 engendre un arc de cercle parfait. Lorsque l'étrier 21 et donc le porte-diamant 36 sont inclinés dans un sens ou dans l'autre, autour de l'axe OP′, le plan de diamantage s'incline de l'angle de pivotement. La pointe du diamant 22 décrit toujours un arc de cercle parfait, mais dans un plan incliné par rapport au plan POP′, provoquant le détalonnement dissymétrique de la meule 17, nécessaire à la correction.

Si l'on se reporte maintenant la figure 6, on voit la vis mère 5 et son double écrou 25a, 25b billes. Le double écrou 25a, 25b est solidarisé à un boîtier oscillant 19 monté dans des roulements à contact oblique 27a, 27b préchargés qui eux-mêmes dépendent du boîtier fixe 12. Un galet tonneau 28 est réuni fonctionnellement au boîtier oscillant 19 de telle sorte que le boîtier oscillant 19 est soumis aux déplacements du galet tonneau 28.

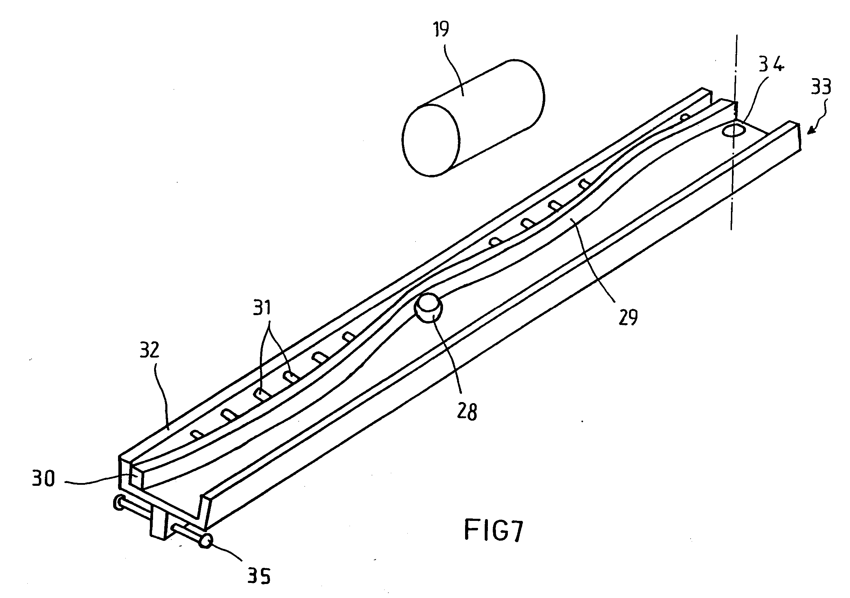

Comme le montre la figure 7, où l'on n'a représenté schématiquement que le boîtier oscillant 19 et le galet tonneau 28, ce dernier est adapté à rouler le long d'une surface de came 29 définie par une bande métallique déformable 30̸. La bande 30̸ est vissée par une série de vis 31 dans la face intérieure de l'une des ailes 32 d'un rail en U 33, lesquelles vis 31 permettent d'écarter plus ou moins des parties de la bande métallique 30̸ de l'aile 32, créant ainsi la surface de came voulue 29.

Les variations de positions du galet tonneau 28 par rapport à l'axe longitudinal du rail 33 provoquent une oscillation du boîtier 19, laquelle entraîne une rotation du double écrou 25a, 25b, donc un déplacement du chariot 4, image du profil de came 29. Le profil de came 29 sera ajusté lors de la mise au point de la machine et permettra de corriger les erreurs éventuelles de pas de la vis mère 5.

Le rail 33 est fixé sur une règle articulée sur un pivot 34 du banc, localisé sous le mandrin 8 de la machine. La règle, donc la came 29, peut osciller autour de la position moyenne colinéaire au déplacement du chariot 4. Le réglage de cette oscillation, qui se fait à l'aide de la vis 35, entraînera une correction de pas soit dans le sens positif, soit dans le sens négatif suivant la position de la règle.

Cette structure permet donc :
- de corriger les erreurs de pas de la vis mère,
- de réaliser les corrections de pas exigées par certains utilisateurs.

Il est à noter que ce système est applicable à tout système de déplacement linéaire des vis à billes (modules, portiques, etc...)

La vis attendue sera généralement obtenue à partir de la barre à tailler 6 en trois passes, deux passes d'ébauche et une de finition.

Il est bien entendu que l'invention n'est pas limitée à la forme d'exécution décrite et représentée.

En particulier, la machine selon l'invention pourrait être munie d'un système de contrôle et d'automatisme.

L'automatisation nécessite :
- un dispositif de mesure de profondeur de taillage commandant les séquences d'ébauche.
   L'ébauche étant réalisée avec des meules en nitrure de bore (Borazon), le diamantage entre les passes n'est pas nécessaire. Il est alors possible, en contrôlant la profondeur de taillage et en utilisant une commande électrique du chariot 4 de machine, de programmer les phases d'ébauche, voire de finition.
- un dispositif de visualisation du profil en cours de taillage.
   En principe, un tel dispositif n'est pas strictement nécessaire si le profil de la meule se conserve pendant toute la séquence. Cependant, il peut s'avérer nécessaire de garder le contrôle du profil de façon permanente gour prévenir la nécessité d'un diamantage.
- un dispositif de contrôle de pas avec enregistreur.
   Le système pourrait être une simple visualisation de côté avec enregistrement sur imprimante. Le but est d'éviter le contrôle a postériori et d'obtenir un certificat de contrôle automatique pour 100 % de la production.

Comme il ressort de la description qui précède, l'invention permet :
- de fabriquer, sur la même machine et dans des conditions économiques, des vis rectifiées, directement à partir de barres à tailler, ce qui réduit le nombre d'opérations, donc de manipulations et les besoins en équipement
- de simplifier considérablement les opérations de réglage de la rectification (un ouvrier qualifié peut piloter la machine qui ne demande aucun réglage particulier)
- de simplifier la construction de la machine qui en fait un investissement réduit (un cinquième environ du coût d'une machine classique)
- de réduire considérablement le coût de fabrication des vis (un seul opérateur pouvant facilement contrôler cinq machines) tout en en améliorant la qualité métallurgique ;
- d'automatiser totalement la fabrication des vis.

## Revendications

1. Machine adaptée à la fabrication d'une vis rectifiée à partir d'une barre à tailler (6), du type comportant, de première part, des moyens adaptés à recevoir et à entraîner en rotation une vis mère (5) et ladite barre à tailler (6) selon deux axes parallèles (X-X′, Y-Y′), de deuxième part, un ensemble mobile (40̸) porteur de moyens abrasifs (17) adaptés à venir en contact avec ladite barre (6) et à la tailler, ledit ensemble mobile (40̸) comportant des moyens (25a, 25b) coopérant avec le filet de ladite vis mère (5) pour être entraîné et se déplacer le long de celle-ci et, de troisième part, des moyens de guidage (13) pour ladite barre à tailler (6), caractérisée en ce que lesdits moyens de guidage sont constitués d'un manchon cylindrique (13) dépendant de l'ensemble mobile (40̸) et coaxial à l'axe (Y-Y′) de la barre à tailler (6), ledit manchon (13) étant adapté à être traversé sans jeu par ladite barre (6) et présentant, dans un plan (POP′) faisant un angle avec ledit axe (Y-Y′), une lumière (16) au travers de laquelle les moyens abrasifs (17) accèdent à ladite barre (6).

2. Machine selon la revendication 1, caractérisée en ce que ledit plan (POP′) est transversal audit axe (Y-Y′).

3. Machine selon la revendication 1 ou 2, caractérisée en ce que ledit manchon (13) est constitué, d'une part, d'un palier (14) fixé audit ensemble mobile (40̸) et, d'autre part, d'un fourreau (15) en matière plastique emboîté de manière amovible dans ledit palier (14), ladite lumière (16) étant ménagée à la fois (16a) dans ledit palier et (16b) dans ledit fourreau.

4. Machine selon l'une quelconque des revendications 1 à 3, caractérisée en ce que les moyens coopérant avec le filet de ladite vis mère (5) sont constitués par un ensemble d'écrous (25a, 25b) monté dans un boîtier oscillant (19), lequel boîtier est soumis à l'extraction de moyens correcteurs de pas (28, 29).

5. Machine selon la revendication 4, caractérisée en ce que lesdits moyens correcteurs de pas sont constitués, d'une part, d'une surface de came (29) à géométrie réglable dépendant d'un rail (33) parallèle à la vis mère (5) et, d'autre part, d'un galet de poursuite (28) dépendant dudit boîtier oscillant (19) et adapté à suivre ladite surface de came (29).

6. Machine selon la revendication 5, caractérisée en ce que ledit rail (33) à la forme d'un U et en ce que la surface de came (29) est constitée d'une bande métallique (30̸) déformable vissée le long de la face interne de l'une (32) des ailes du U par une série de vis (31) au moyen desquelles des parties de ladite bande (30̸) peuvent être plus ou moins écartées de ladite aile (32) pour compenser les défauts de la vis mère (5).

7. Machine selon l'une des revendications 5 ou 6, caractérisée en ce que ledit rail (33) est monté pivotant (34) à l'une des ses extrémités et en ce que son autre extrémité comporte des moyens de réglage (35) adaptés à décaler d'un degré voulu l'axe longitudinal dudit rail (33) par rapport à celui (X-X′) de la vis mère (5), aux fins d'opérer une correction de pas globale.

8. Machine selon l'une quelconque des revendications 2 à 7, caractérisée en ce que les moyens abrasifs (17) sont orientés selon ledit plan transversal (POP′).

9. Machine selon l'une des revendications 1 à 8, caractérisée en ce que lesdits moyens abrasifs (17) sont constitués par une meule dont le profil de travail est sensiblement elliptique.

10. Machine selon la revendication 7, caractérisée en ce que ledit ensemble mobile (40̸) comporte des moyens de diamantage (20̸-24) adaptés à détalonner, sensiblement en ellipse, le profil de travail de la meule (17) avant mise en service ou en cours d'utilisation, entre deux passes.

## Patentansprüche

1. Maschine zur Herstellung einer geschliffenen Schraube aus einer zu bearbeitenden Stange (6), umfassend erstens Mittel zur Aufnahme und zum Drehantrieb einer Leitspindel (5) und der zu bearbeitenden Stange (6) in zwei parallelen Achsen (XX′, Y-Y′), zweitens eine bewegliche Einheit (40), die Schleifmittel (17) trägt, die mit der Stange (6) in Kontakt kommen und sie bearbeiten können, wobei diese bewegliche Einheit (40) Mittel (25a, 25b) umfaßt, die mit dein Gewinde der Leitspindel (5) zusammenwirken, um angetrieben zu werden und sich auf ihr zu bewegen, und drittens Führungamittel (13) für die zu bearbeitende Stange (6), dadurch gekennzeichnet, daß diese Führungsmittel aus einer zylindrischen Muffe (13) bestehen, die an die bewegliche Einheit (40) gebunden und zur Achse (Y-Y′) der zu bearbeitenden Stange (6) koaxial ist, wobei diese Muffe (13) von dieser Stange (6) spielfrei durchquert werden kann und in einer Ebene (POP′), die mit dieser Achse (Y-Y′) einen Winkel bildet, einen Schlitz (16) besitzt, durch den die Schleifmittel (17) Zugang zu dieser Stange (6) haben.

2. Maschine nach Anspruch 1, dadurch gekennzeichnet, daß diese Ebene (POP′) sich quer zur Achse (Y-Y′) erstreckt.

3. Maschine nach Anspruch 1 oder 2, dadurch gekennzeichnet, daß die Muffe (13) einerseits aus einem an der beweglichen Einheit (40) befestigten Lager (14) und andererseits aus einer Hülse (15) aus Kunststoff besteht, die in das Lager (14) lösbar eingesteckt ist, wobei der Schlitz (16) gleichzeitig (16a) in diesem Lager und (16b) in dieser Hülse vorgesehen ist.

4. Maschine nach einem der Ansprüche 1 bis 3, dadurch gekennzeichnet, daß die mit dem Gewinde der Leitspindel (5) zusammenwirkenden Mittel aus einer Mutterneinheit (25a, 25b) bestehen, die in einem schwingenden Gehäuse (19) montiert ist, wobei das Gehäuse der Einwirkung von Gangkorrekturmitteln (28, 29) ausgesetzt ist.

5. Maschine nach Anspruch 4, dadurch gekennzeichnet, daß die Gangkorrekturmittel einerseits aus einer Steuerkurvenfläche (29) mit verstellbarer Geometrie, die an eine zur Leitspindel (5) parallele Schiene (33) gebunden ist, und andererseits aus einer Nachführungsrolle (28) besteht, die an das schwingende Gehäuse (19) gebunden ist und der Kurvenfläche (29) folgen kann.

6. Maschine nach Anspruch 5, dadurch gekennzeichnet, daß diese Schiene (33) die Form eines U hat und daß die Kurvenfläche (29) aus einem verformbaren Metallband (30) besteht, das längs der Innenseite einer (32) der Schenkel des U durch eine Reihe von Schrauben (31) angeschraubt ist, mit deren Hilfe Teile dieses Bandes (30) von diesem Schenkel (32) mehr oder weniger weit entfernt sein können, um die Fehler der Leitspindel (5) auszugleichen.

7. Maschine nach einem der Ansprüche 5 oder 6, dadurch gekennzeichnet, daß diese Schiene (33) an einem ihrer Enden verschwenkbar (34) montiert ist und daß ihr anderes Ende Stellmittel (35) aufweist, die die Längsachse der Schiene (33) bezüglich der Achse (X-X′) der Leitspindel (5) zur Durchführung einer Gesamtschrittkorrektur um einen gewünschten Grad versetzen können.

8. Maschine nach einem der Ansprüche 2 bis 7, dadurch gekennzeichnet, daß die Schleifmittel (17) in der Querebene (POP′) angeordnet sind.

9. Maschine nach einem der Ansprüche 1 bis 8, dadurch gekennzeichnet, daß diese Schleifmittel (17) aus einer Schleifscheibe bestehen, deren Arbeitsprofil im wesentlichen elliptisch ist.

10. Maschine nach Anspruch 7, dadurch gekennzeichnet, daß die bewegliche Einheit (40) Diamant-Feinschleifmittel (20-24) umfaßt, die das Arbeitsprofil der Schleifscheibe (17) vor Inbetriebnahme oder während der Verwendung zwischen zwei Durchgängen im wesentlichen in Form einer Ellipse hinterschleifen können.

## Claims

1. Machine designed for manufacturing a ground screw starting from a rod (6) to be cut, of the type comprising, firstly, means designed to receive and drive in rotation a lead screw (5) and the said rod (6) to be cut in two parallel axes (X-X′, Y-Y′), secondly a movable unit (40) carrying abrasive means (17) designed to come into contact with the said rod (6) and to cut it, the said movable unit (40) comprising means (25a, 25b) interacting with the thread of the said lead screw (5) so as to be driven and to move along the latter and, thirdly, guide means (13) for the said rod (6) to be cut, characterized in that the said guide means consist of a cylindrical sleeve (13) dependent on the movable unit (40) and coaxial with the axis (Y-Y′) of the rod (6) to be cut, the said sleeve (13) being designed so that the said rod (6) passes through it without any play, and having, in a plane (POP′) making an angle with the said axis (Y-Y′), a slot (16) via which the abrasive means (17) have access to the said rod (6).

2. Machine according to Claim 1, characterized in that the said plane (POP′) is transverse to the said axis (Y-Y′).

3. Machine according to Claim 1 or 2, characterized in that the said sleeve (13) consists, on the one hand, of a bearing (14) fixed to the said movable unit (40) and, on the other hand, of a plastic bush (15) fitted removably in the said bearing (14), the said slot (16) being formed both (16a) in the said bearing and (16b) in the said bush.

4. Machine according to any one of Claims 1 to 3, characterized in that the means interacting with the thread of the said lead screw (5) consist of a set of nuts (25a, 25b) which is mounted in an oscillating casing (19), and the said casing is subject to the action of pitch correcting means (28, 29).

5. Machine according to Claim 4, characterized in that the said pitch correcting means consists, on the one hand, of a cam surface (29) of adjustable geometry which is dependent on a rail (33) parallel to the lead screw (5) and, on the other hand, of a follower roller (28) which is dependent on the said oscillating casing (19) and designed to follow the said cam surface (29).

6. Machine according to Claim 5, characterized in that the said rail (33) has the shape of a U, and in that the cam surface (29) consists of a deformable metal strip (30) screwed along the inner face of one (32) of the arms of the U by a series of screws (31) by means of which some parts of the said strip (30) may be nearer to or further from the said arm (32) in order to compensate for defects in the lead screw (5).

7. Machine according to either of Claims 5 and 6, characterized in that the said rail (33) is mounted pivotably (34) at one of its ends, and in that its other end comprises adjustment means (35) designed to offset the longitudinal axis of the said rail (33) by a desired degree relative to that (X-X′) of the lead screw (5), in order to effect a global pitch correction.

8. Machine according to any one of Claims 2 to 7, characterized in that the abrasive means (17) lie in the said transverse plane (POP′).

9. Machine according to one of Claims 1 to 8, characterized in that the said abrasive means (17) consist of a grinding wheel with a substantially elliptical working profile.

10. Machine according to Claim 7, characterized in that the said movable unit (40) comprises diamond-charged cutting means (20-24) designed to relieve, substantially in the shape of an ellipse, the working profile of the grinding wheel (17) before it is employed or during use, between two passes.
